# EUROPEAN PATENT APPLICATION

(11) **EP 4 768 413 A1**
(43) Date of publication of application: **01.07.2026**
(21) Application number: 25219389.1
(22) Date of filing: 28.11.2025
(51) Int. Cl.: B66B 9/10, B65G 1/127, B65G 17/18, B65G 17/12, B65G 47/58

(54) **AFFORDABLE COMPACT AND ERGONOMIC AUTOMATED BULK CONTAINER HANDLING APPARATUS**

(30) Priority: 27.12.2024 IN 202421103628
(71) Applicant: Tata Consultancy Services Limited, Maharashtra (IN)
(72) Inventor: BHASKARA, Mohan, 560100 Bangalore, Karnataka (IN); KESHAVA, Ullas Chennabettu, 560067 Bangalore, Karnataka (IN); CHIKKAPPA, Mahesh Mittalakatte, 560067 Bangalore, Karnataka (IN)
(74) Representative: Goddar, Heinz J.

(57) **Abstract**

An affordable compact and ergonomic bulk container handling apparatus is disclosed. A machine support structure supports a plurality of dual pair of guide rods which form the guide profile through the plurality of support brackets, a dual drive arm assembly, that further holds container holders. Dual drive arm assembly holds each container holder at a first end and a second end of each container holder via a pair of guide follower driver roller system at each drive arm of the dual drive arm assembly. Each of guide follower driver roller system couples each drive arm to a plurality of dual pair of guide rods which form the guide profile, through the plurality of support brackets at the first end and the second end of each container holder. A drive motor is attached on side of the dual drive arm assembly to power the dual drive arm assembly along guide profile.

## Description

### CROSS-REFERENCE TO RELATED APPLICATIONS AND PRIORITY

The present application claims priority to Indian application no 202421103628, filed on December 27, 2024.

### TECHNICAL FIELD

The disclosure herein generally relates to the field of bulk container handling systems, and, more particularly, to affordable compact and ergonomic automated bulk container handling apparatus.

### BACKGROUND

Currently the operators are using the kitting parts for operations from the heavy and large size containers which are placed side by side on a raised platform. Kitting is an important inventory management practice often used to reduce the complexity and increase the efficiency of assembly in a given manufacturing process. This process generally involves a number of components needed to complete a specific portion of the product. Conventional side by side placement of the large or bulk containers occupies huge amounts of real estate of the plant or warehouse, especially in kitting and sequencing areas. These bulk container generally can be 1200 mm in length, 1000 mm in width, 1000 mm in height and can hold 1000 kg of components by weight. Since the platform height is not adjustable, it will not be ergonomical for operators who are of different heights. The side by side container placement consumes space and requires considerable movement of operators to pick items form each container.

For small containers, a basic ferry wheel type design mechanisms have been attempted to address the horizontal and vertical space utilization to address space consideration. The structure of the ferry wheel above relies on a pair of driving wheels connected through a common shaft. Further, each container holder is pivoted at one position on the wheel arms and has fixed circular path. If a similar mechanism has to be applied to bulk container a large diameter wheel is needed. The wheel will have container movement in a fixed circular path, which is bound to occupy more space. Further, with large diameter needed for bulk containers, this space is further increased.

Space reduction is the crucial criteria. Thus fitting more bulk containers in less space is a demand, to provide space efficient storage with effective reduction in unnecessary operator movement, further providing time efficient, less exhausting work execution.

The support structure or frame designs such as above occupy more space, as it has to accommodate the containers placed side by side. The structure top frame will obstruct the picking operation for the operator. Due to the construction of the structure the picking and loading can happen only when the container is positioned at the bottom and top. The frame structure will not allow the containers to stop at other locations than that at bottom and top. In any other location the containers will be obstructed by the frame and picking or loading will not be possible. This structure will not be ergonomical and will not be able to accommodate operators of different heights.

Furthermore, ergonomic considerations are hardly addressed by any of the existing mechanisms, and do not allow height adjustment of rotating containers, to the need of the operators.

### SUMMARY

Embodiments of the present disclosure present technological improvements as solutions to one or more of the above-mentioned technical problems recognized by the inventors in conventional systems. For example, in one embodiment, an affordable compact and ergonomic automated bulk container handling apparatus is provided.

An apparatus for bulk container handling, the apparatus comprising a plurality of container holders holding a plurality of containers. A dual drive arm assembly holding each container holder among the plurality container holders at a first end and a second end of each container holder via a pair of guide follower driver roller system at each drive arm of the dual drive arm assembly.

Each of the pair of guide follower driver roller systems further coupling each drive arm to a plurality of pairs of guide rods those create a guide profile at the first end and the second end of each container holder, wherein the guide follower driver roller system with the plurality of pairs of guide rods those create the guide profile guide movement of the plurality of containers along the guide profile. A drive motor and housing attached on one side of the dual drive arm assembly to power the dual drive arm assembly into a rotational movement and put the plurality of containers into a guide profile path. A machine support structure supporting the plurality pairs of guide rods to create the guide path through the support brackets, the dual drive arm assembly, and the plurality of container holders.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIGS. 1A and 1B depict a three-dimensional (3-D) view of an affordable compact and ergonomic automated bulk container handling apparatus, according to some embodiments of the present disclosure.
FIG. 2 depicts an exploded view of the apparatus, according to some embodiments of the present disclosure.
FIGS. 3A depicts a top view, FIG. 3B depicts a left-hand side (LHS) view, FIG. 3C depicts a front view, and FIG. 3D depicts a right-hand side (RHS) view of the apparatus of FIGS. 1A and 1B, according to some embodiments of the present disclosure.
FIG. 4 depicts a machine support structure of the apparatus, according to some embodiments of the present disclosure.
FIG. 5 depicts individual component view of components of the apparatus placed over the machine support structure, according to some embodiments of the present disclosure.
FIG. 6, FIG. 7 and FIG. 8 depict a drive system of the apparatus, according to some embodiments of the present disclosure.
FIG. 9 explains the space efficiency provided by the apparatus, according to some embodiments of the present disclosure.
FIG. 10 explains the ergonomic considerations provided by the apparatus, according to some embodiments of the present disclosure.
FIG. 11 depicts loading unloading assembly of the apparatus, according to some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

Embodiments herein present an affordable compact and ergonomic automated bulk container handling apparatus, interchangeably referred to as apparatus or Affordable Compact & Ergonomic Automated Bulk Container Handling System (ACE ABS). For example, the size of bulk container handled can be 1200 mm in length, 1000 mm in width, 1000 mm in height and can hold 1000 kg of components by weight. The apparatus or ACE ABS can accommodate 3 bulk containers in the space of 1.25 (For e.g. 240 containers can be accommodated in the current space for 100 containers). This is a huge saving in the floor space. A mechanism provided enables bringing the containers to the required ergonomical height and locking or holding them for picking. This enables operators having different body dimensions to effectively, with convenience perform the job with desired adjustment of the bulk containers, also referred to as containers hereinafter. The picking length/distance by the operator is hugely reduced as 3 containers are available for picking objects. In the existing container placement methods, the operator needs to move to-and-fro, for at least 4.0 meters along the ground to take the object from the side by side placed third container and bring it back to the current position of Point of Use. Assuming the width of the container as 1000 mm, 3^{rd} container from the current one will be at least 2000 mm. So with existing container placements, the operator has to move to-and-fro of 4 m at least. The compact design provided herein can reduce the manpower effort due to picking length reduction. At any point in time the kitting operation need not be stopped, as the empty container (one of the three) can be unloaded and loaded from the opposite side and at least one container will be available to the operator on the other side of Point of Use. The apparatus can be manufactured at an affordable cost, as all components of the system except the electric motor, which will be a "Commercially of the shelf" item (COTS) can be manufactured from commercially available structural steel. In addition, the design for manufacturing principles used provides ease of manufacturing with lower cost, giving rise to good return on investment. The ergonomically designed apparatus can reduce operator injuries and improve productivity.

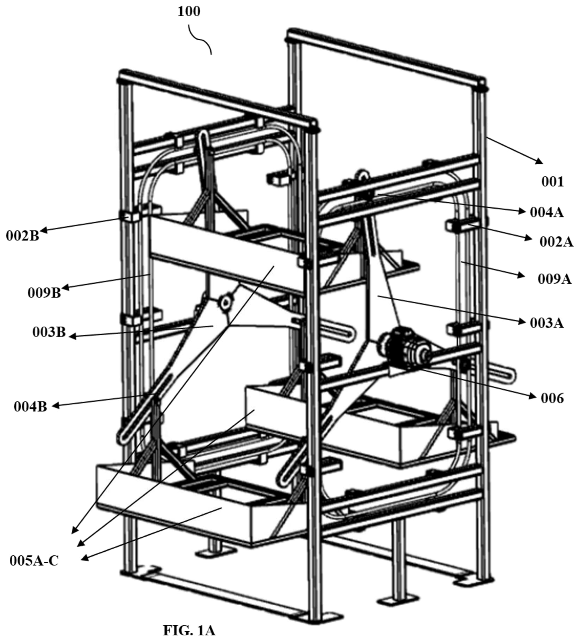

Referring now to the drawings, and more particularly to FIG. 1A through FIG. 11, where similar reference characters denote corresponding features consistently throughout the figures, there are shown preferred embodiments, and these embodiments are described in the context of the following exemplary system and/or method. Reference numerals of one or more components of the apparatus as depicted in the FIGS. 1A through 5 are provided in Table 1 below for quick reference to the description:

**Table 1**

| Sl. No | Component with alternative name | Numeral reference |
|---|---|---|
| 1 | Apparatus | 100 |
| 2 | Machine support structure | 001 |
| 3 | Plurality of support brackets | 002A-B |
| 4 | Dual drive arm assembly | 003A-B |
| 5 | Guide follower driver roller system | 004A-B |
| 6 | Plurality of container holders | 005A-C |
| 7 | Drive motor and housing | 006 |
| 8 | Plurality of containers | 007A-C |
| 9 | Fixed length fixed dimension connectors on top end | 008A |
| 10 | Fixed length fixed dimension connectors on floor end (flat connectors) | 008B |
| 11 | Pair of guide rods creating a guide profile | 009A-B |
| 12 | Slot on each drive arm of the dual drive arm assembly | 301 |
| 13 | Central Hub and motor shaft assembly | 601 |

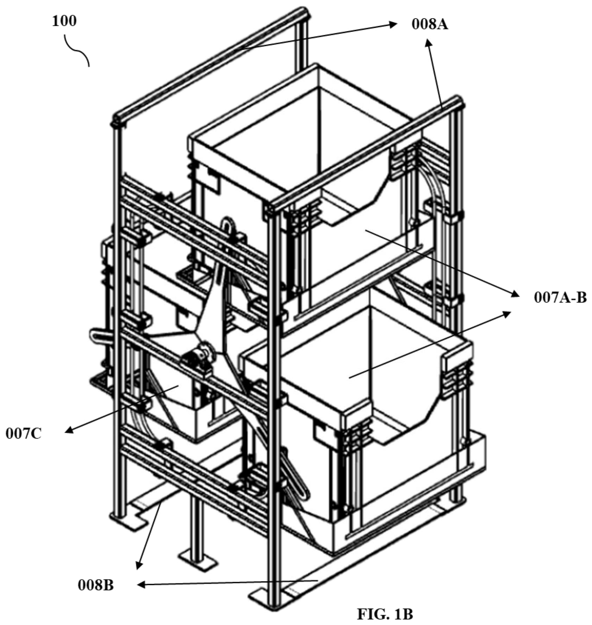

FIG. 1A and 1B depict a three-dimensional (3-D) view of an affordable compact and ergonomic automated bulk container handling apparatus, according to some embodiments of the present disclosure. FIG. 1A and 1B depict a machine support structure (001) supporting a plurality of dual pair of guide rods which form the guide profile (009A-B), through the plurality of brackets (002A-B), a dual drive arm assembly (003A-B), that further holds a plurality of container holders (005A-C). The plurality of container holders holding (005A-C) a plurality of containers (007A-C), are interchangeably referred to as bulk containers. Each of the guide follower driver roller system (004A-B) contains a shaft which has a square cross-section at one end which fits into the container holders (005A-C), while the other end is cylindrical and is fitted with a guide roller which follows the guide profile (009A-B) and the cylindrical section in between the shaft ends also passes through the slot in the drive arm (301). The guide follower driver roller system (004A-B) with the plurality of pairs of guide rods create the guide profile (009 A-B) to guide the movement of the plurality of containers (007A-C) along a guide track profile. A drive motor and housing (006) attached on one side of the dual drive arm assembly (003A-B) to power the dual drive arm assembly (003A-B) into a rotational movement and put the plurality of containers (007A-C) into motion along the guide profile (009A-B), interchangeably referred to as guide path.

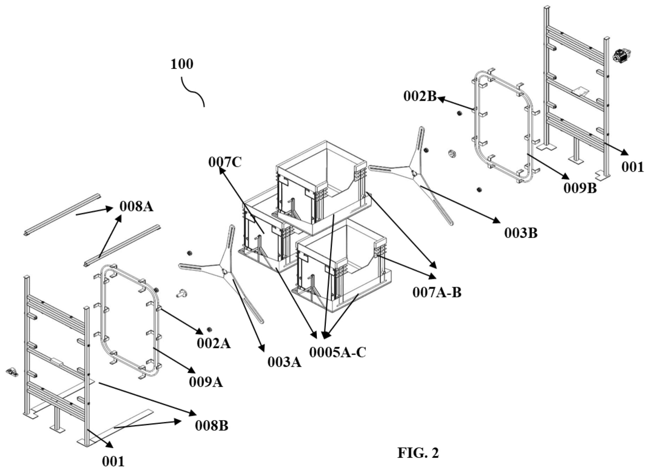

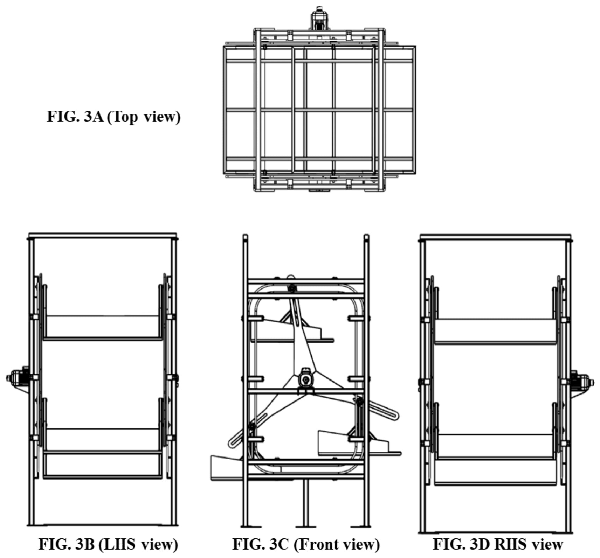

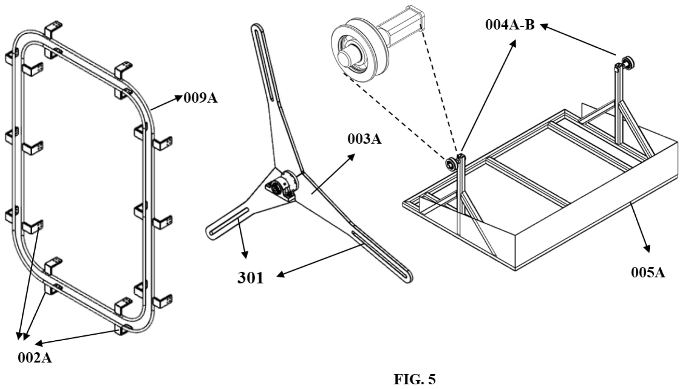

FIG. 2 depicts an exploded view of the apparatus 100, according to some embodiments of the present disclosure. FIG. 3A depicts a top view, FIG. 3B depicts a left-hand side (LHS) view, FIG. 3C depicts a front view, and FIG. 3D depicts a right-hand side (RHS) view of the apparatus of FIGS. 1A and 1B, according to some embodiments of the present disclosure. FIG. 5 depicts individual component view of components of the apparatus placed over the machine support structure.

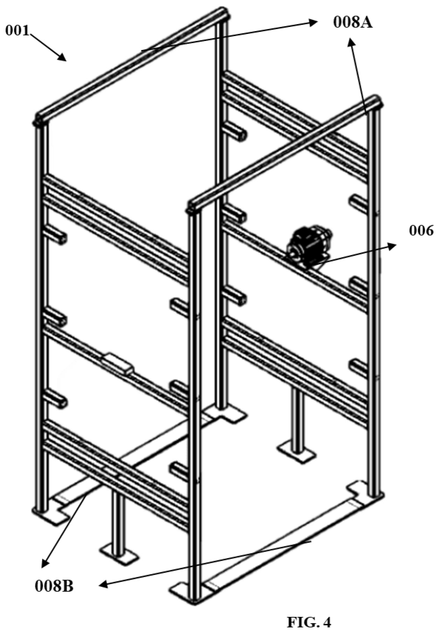

FIG. 4 explicitly depicts the machine support structure of the apparatus 100, according to some embodiments of the present disclosure. The machine support structure (001) comprises a pair of fixed length fixed dimension connectors (008A-B) on top end and floor end providing a rigid framework with a fixed distance between the plurality of containers (007A-C). The pair of fixed length fixed dimension connectors (008A-B), on the floor end side are flat connectors (008B) to allow an obstacle-free movement between the plurality of container holders (005A-C) and the flat connectors (008B).

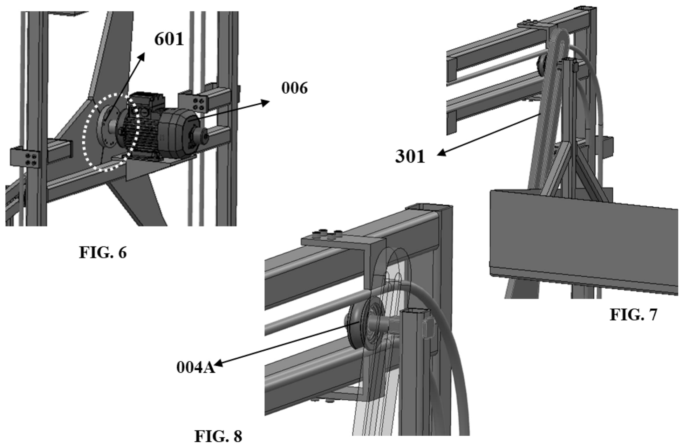

FIG. 6, FIG. 7 and FIG. 8 depict a drive system of the apparatus (100), according to some embodiments of the present disclosure. The drive motor and housing (006) depicted in FIG. 6 comprises the drive motor with brake, which is mounted on a housing, and it can rotate both clockwise (CW) and Counterclockwise (CCW) directions. The drive motor provides necessary torque to overcome the static load of the containers and the drive path friction. The motor brake can be applied during the operation and while loading the containers, to stop and hold the plurality of containers. A shaft of the drive motor is connected to the central hub, depicted by dotted circle and referred to as a central hub and motor shaft assembly (601) of the drive arms on one side of the dual drive arm assembly. The drive arms are positioned between the container holder and the guide track. The drive arm as seen in FIG. 5 and FIG. 7 has the slot (301) for the guide follower drive roller system (004A) to traverse, as can been seen in FIG. 8..

**Drive motion:** When commanded, the drive motor rotates in either CW or CCW directions. The central hub and motor shaft assembly (601) then drives the drive arms accordingly. The guide roller follower shaft (004A) which passes through the drive arm slot (301) is then driven. Since one end of the shaft, which is fitted with the guide roller, which has matching groove as per the geometric section of the guide rods positioned in the guide track, the container which is connected to the other end of the shaft will start traversing per the guide track profile. Thus, the motion is affected. The apparatus 100 adjusts the rotation speed and is controlled by the drive motor. The output speed at which the dual drive arm assembly (003A-B) moves is expected to be 1 to 2 RPM based on the task time requirement.

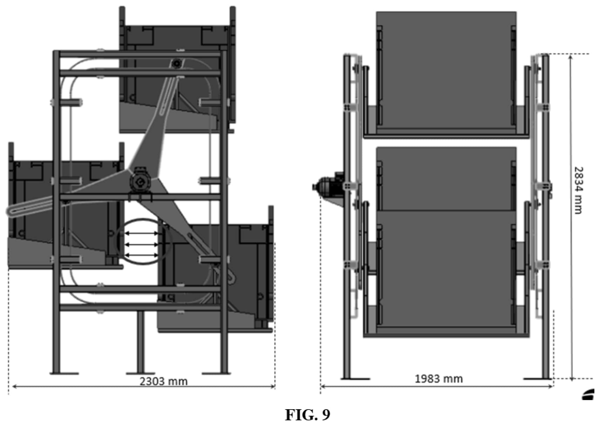

**Space consideration:** The overall dimension of the apparatus (100) is made compact, by designing the guide path or guide profile 009(A-B) optimally. The following are the considerations. As depicted in FIG. 9, the width of the apparatus 100 (2303 mm) is determined by the width of the guide track, such that no container will touch the other in any configuration and maintains a minimum gap. The length of the apparatus (100) is made compact (1983 mm) by ensuring proper frame structure and guide track cross section. A minimum clearance is provided on either side of the container holders (005A-C) such that any loading apparatus can easily load the containers (007A-C). The height of the apparatus 100 is limited (2834 mm) by flattening the guide path at the top and bottom of the profile. Additionally, this flat profile provides stable seating of the containers during any loading or operating conditions.

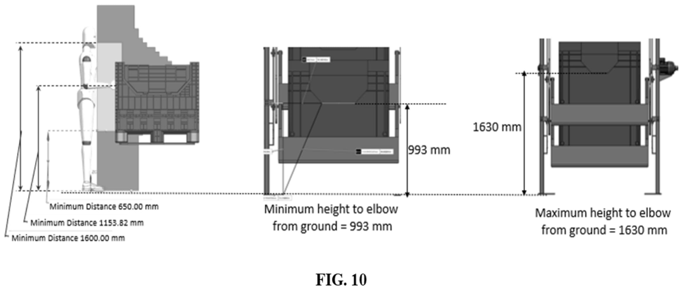

FIG. 10 explains the ergonomic considerations provided by the apparatus (100), according to some embodiments of the present disclosure. The guide track profile is designed based on the following considerations:
1. The vertical portion of the guide path or guide profile (009A) is such that any operator whose elbow height from the ground (floor) is between 993 mm till 1630 mm can be accommodated, i.e., the operators can pick any component from the containers ergonomically.
2. The drive motor control will allow the operator to stop at any required height.
3. Also, since the containers can be very deep, for example, 1000mm, the operator can make the container move up or down so as to pick the components from the depth of the container without bending.

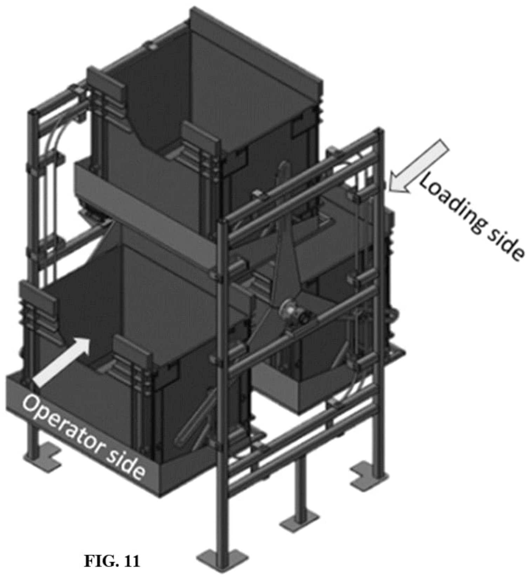

As depicted in FIG. 11, the apparatus 100 is designed to enable loading and unloading of 3 containers (007A-C) placed 120 degrees apart, such that while one of the containers is positioned on the rear side for operator's use, the other container will be on the front side for loading/ unloading. The third container is always on the top flat portion of the guide track during operating and/or loading configuration. The third container on the top makes the apparatus stable by providing counter balancing effect.

Unlike the ferry wheel designs or similar designs proposed in the art, the machine support structure (001) provides the support to structures lying on sides of containers, with only top end and floor end support along the container face. This design does not obstruct the picking operation for the operator. Thus also enables holding, picking and loading operation to be performed at any position of the guide profile or path. The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. An apparatus (100) for bulk container handling, the apparatus comprising:
a plurality of container holders holding (005A-C) a plurality of containers (007A-C);
a dual drive arm assembly (003A-B) holding each container holder (005A) among the plurality container holders (005A-C) at a first end and a second end of each container holder via a pair of guide follower driver roller system (004A-B) at each drive arm of the dual drive arm assembly (003A-B);
each of the pair of guide follower driver roller system (004A-B) further coupling each drive arm to a plurality of pairs of guide rods those create a guide profile (009A-B) at the first end and the second end of each container holder (005A), wherein the guide follower driver roller system (004A-B) with the plurality of pairs of guide rods those create the guide profile (009A-B) and guide movement of the plurality of containers (007A-C) along the guide profile;
a drive motor and housing (006) attached on one side of the dual drive arm assembly (003A-B) to power the dual drive arm assembly (003A-B) into a rotational movement and put the plurality of containers (007A-C) into a guide profile path; and
a machine support structure (001) supporting the plurality of pairs of guide rods to create the guide path (009A-B) through the support brackets (002A-B), the dual drive arm assembly (003A-B), and the plurality of container holders (005A-C).

2. The apparatus (100) as claimed in claim 1, wherein the machine support structure (001) comprises a pair of fixed length fixed dimension connectors (008A-B) on top end and floor end providing a rigid framework with a fixed distance between the plurality of container holders (005A-C), wherein, the pair of fixed length fixed dimension connectors (008A-B), on the floor end side are flat connectors (008B) to allow an obstacle free movement between the plurality of container holders (005A-C) and the flat connectors (008B).

3. The apparatus (100) as claimed in claim 1, wherein a slot (301) on each drive arm of the dual drive arm assembly (003A-B) facilitates traversing of the guide follower drive roller system (004A-B).

4. The apparatus (100) as claimed in claim 1, wherein a drive motor and housing (006),
controls the rotational movement of the dual drive arm assembly in a clockwise (CW) direction and a Counterclockwise (CCW) direction, and
holds the plurality of containers (007A-C) to an ergonomic height, adjustable based on body dimensions of an operator.

5. The apparatus (100) as claimed in claim 1, wherein the rotational path followed by the plurality of containers (007A-C) allows positioning an empty container for loading from a line side while enabling utilization of filled in containers on an opposite operation side.
